# EUROPEAN PATENT APPLICATION

(11) **EP 4 310 386 A1**
(43) Date of publication of application: **24.01.2024**
(21) Application number: 23185335.9
(22) Date of filing: 13.07.2023
(51) Int. Cl.: F17C 1/16

(54) **SUSTAINABLE COMPOSITE CYLINDER**

(30) Priority: 19.07.2022 US 202217867893
(71) Applicant: B/E Aerospace, Inc., Winston-Salem, NC 27105 (US)
(72) Inventor: PARKER, Lisa M., Raytown, MO (US)
(74) Representative: Dehns

(57) **Abstract**

A composite cylinder assembly may comprise a tube liner (302, 802) and a port. The tube liner (302, 802) may include a closed bottom portion (304, 804), a substantially cylindrical wall, and a domed head portion (308, 808) defining a neck. The port (401) may comprise an outer diameter configured to fit into an inner diameter of the liner neck. The port (401) may further comprise a lip (404) including an outer diameter that is greater than the inner diameter of the liner neck. The port (401) may also comprise a swage recess (406) having an outer diameter that is less than the inner diameter of the liner neck. The port (401) may be configured to press-fit into the liner neck. The lip (404) may be configured to provide a surface area to weld the port (401) to the liner neck. The swage recess (406) may be configured to provide an area to swage the liner neck to the port.

## Description

### FIELD

The present disclosure relates to composite cylinder assemblies, and more specifically, sustainable composite cylinder assemblies incorporated into aerospace applications.

### BACKGROUND

Fiber wrapped reinforced metal lined high pressure composite gas cylinder assemblies incorporated into aerospace applications typically comprise seamless aluminum liners with relatively thick walls with significant variation in thickness. This renders the gas cylinder assemblies too large to be incorporated into space-constrained locations inside an aircraft such as passenger emergency breathing oxygen installed in the Passenger Service Unit ("PSU") in overhead portions of an aircraft cabin. Even if gas cylinder assemblies were small enough to be incorporated into PSUs, the small package size would likely be at the cost of projectile impact resistance, which is required for gas cylinder assemblies installed in the aircraft passenger cabin within the engine rotor burst zone. For example, aluminum-lined composite cylinders are prone to fragmentation when pressurized with pure oxygen. Moreover, gas cylinder assemblies installed in PSUs and other space-constrained locations are typically fully metallic, making them heavier than composite cylinders, which tends to decrease fuel economy.

### SUMMARY

A composite cylinder assembly is disclosed herein, in accordance with various embodiments. In various embodiments, the composite cylinder assembly may comprise a tube liner. The tube liner may comprise a closed bottom portion, a domed head portion, and a substantially cylindrical wall coupled to the closed bottom portion and the domed head portion. The substantially cylindrical wall may be between the closed bottom portion and the domed head portion. In various embodiments, the domed head portion may define a liner neck.

The composite cylinder assembly may further comprise a port. In various embodiments, the port may comprise an outer diameter configured to fit into an inner diameter of the liner neck. The port may further comprise a lip and a swage recess. The lip may comprise an outer diameter that is greater than the inner diameter of the liner neck. The swage recess may comprise an outer diameter that is less than the inner diameter of the liner neck.

In various embodiments, the port may be configured to press-fit into the liner neck. In various embodiments, the lip many be configured to provide a surface area to weld the port to the liner neck. In various embodiments, the swage recess may be configured to provide an area to swage the liner neck to the port.

In various embodiments, the tube liner may further comprise a spindle. The spindle may be a cylindrical disk. In various embodiments, the tube liner may comprise a carbon fiber overwrap. The carbon fiber overwrap may further comprise a glass fiber layer. In various embodiments, the tube liner may be made of metal. In various embodiments, the substantially cylindrical wall of the tube liner may be seamed. In various embodiments, the tube liner may be spin welded.

In various embodiments, the port may further define a channel. In various embodiments, the channel may be substantially cylindrical. In various embodiments, the liner neck may be stoppered at the port lip. In various embodiments, the liner neck may be spin welded to the lip. In various embodiments, the liner neck may be fusion welded to the lip.

A composite cylinder assembly is also disclosed herein. In various embodiments, the composite cylinder assembly may comprise a tube liner. The tube liner may comprise a closed bottom portion, a domed head portion, and a substantially cylindrical wall coupled to the closed bottom portion and the domed head portion. The substantially cylindrical wall may be between the closed bottom portion and the domed head portion. In various embodiments, the domed head portion may define a liner neck. In various embodiments, the closed bottom portion may be deep drawn. In various embodiments, the domed head portion defining the liner neck may be deep drawn.

The composite cylinder assembly may further comprise a port. In various embodiments, the port may comprise an outer diameter configured to fit into an inner diameter of the liner neck. The port may further comprise a lip and a swage recess. The lip may comprise an outer diameter that is greater than the inner diameter of the liner neck. The swage recess may comprise an outer diameter that is less than the inner diameter of the liner neck.

In various embodiments, the port may be configured to press-fit into the liner neck. In various embodiments, the lip many be configured to provide a surface area to weld the port to the liner neck. In various embodiments, the swage recess may be configured to provide an area to swage the liner neck to the port.

In various embodiments, the cylinder wall may be fusion welded to the domed head portion and to the closed bottom portion. The substantially cylindrical wall may comprise a fusion weld line along a girth of the substantially cylindrical wall. In various embodiments, the substantially cylindrical wall may be made of metal. The substantially cylindrical wall may comprise a seam weld line. In various embodiments, the substantially cylindrical wall may be fusion welded to the bottom portion at a first end of the substantially cylindrical wall. The substantially cylindrical wall may be fusion welded to the domed head portion at a second end of the substantially cylindrical wall. In various embodiments, the tube liner may comprise a plurality of fusion weld lines.

A method of manufacturing a composite cylinder assembly is also disclosed herein. In various embodiments, the method may comprise forming a tube liner. The tube liner may comprise a closed bottom portion, a domed head portion, and a substantially cylindrical wall coupled to the closed bottom portion and domed head portion. The substantially cylindrical wall may be between the closed bottom portion and the domed head portion. The domed head portion may define a liner neck.

The method may further comprise fabricating a port. The port may comprise an outer diameter configured to fit into an inner diameter of the liner neck. The port may comprise a lip and a swage recess. In various embodiments, the lip may comprise an outer diameter that is greater than the inner diameter of the liner neck. In various embodiments, the swage recess may comprise an outer diameter that is less than the inner diameter of the liner neck.

The method may further comprise press-fitting the port into the liner neck. In various embodiments, the method may further comprise welding the port to the liner neck at the lip of the port. In various embodiments, the method may further comprise swaging the liner neck to the port at the swage recess.

In various embodiments, the forming step of the method may further comprise spin welding the tube liner. In various embodiments, the forming step may comprise deep drawing the closed bottom portion and the domed head portion. The forming may further comprise fusion welding the domed head portion to the bottom portion to form the substantially cylindrical wall. The substantially cylindrical wall may comprise a fusion weld line along a girth of the substantially cylindrical wall.

In various embodiments, the forming may further comprise deep drawing the closed bottom portion and the domed head portion. The forming may further comprise fabricating the substantially cylindrical wall from sheet metal. In various embodiments, the forming may further comprise seam welding the substantially cylindrical wall. Forming may further comprise fusion welding the substantially cylindrical wall to the bottom portion at a first end of the substantially cylindrical wall. Forming may further comprise fusion welding the substantially cylindrical wall to the domed head portion at a second end of the substantially cylindrical wall.

### BRIEF DESCRIPTION OF THE DRAWINGS

FIG. 1A illustrates a view of a cabin of an aircraft, in accordance with various embodiments;
FIG. 1B illustrates a schematic view of emergency breathing oxygen cylinders in an aircraft, in accordance with various embodiments;
FIG. 2 illustrates an evacuation assembly slide in a deployed position, in accordance with various embodiments;
FIG. 3 illustrates a cylinder assembly, in accordance with various embodiments;
FIG. 4A illustrates a cross-section view of a port for a cylinder assembly, in accordance with various embodiments;
FIG. 4B illustrates a perspective view of the port of FIG. 4A, in accordance with various embodiments;
FIG. 5 illustrates the port of FIG. 4B as part of the cylinder assembly of FIG. 3, in accordance with various embodiments;
FIG. 6 illustrates the port swaged into the liner of the cylinder assembly, in accordance with various embodiments;
FIG. 7 illustrates the cylinder assembly having a carbon fiber overwrap, in accordance with various embodiments;
FIG. 8 illustrates a cylinder assembly having a fusion weld along a girth of the cylinder, in accordance with various embodiments; and
FIG. 9 illustrates a cylinder assembly having multiple fusion welds and a seam weld along a girth of the cylinder, in accordance with various embodiments; and
FIG. 10 illustrates a method of manufacturing a cylinder assembly.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

A composite cylinder, as disclosed herein, may be used to provide oxygen to passengers and crew. The composite cylinder may also be used to inflate aircraft evacuation systems, such as evacuation slides and life-raft assemblies. This disclosure is not limited in that regard. The composite cylinder disclosed herein may be advantageous over conventional seamless aluminum-lined composite cylinders in that the composite cylinder has a greater service life over conventional seamless aluminum-lined composite cylinders, reducing costs. Moreover, decreasing the number of re-inspections and re-tests required decreases the likelihood of cylinder failure over the service life of an aircraft, PSU, or evacuation assembly, since the cylinders are more likely to be damaged during re-inspection and re-testing.

Composite cylinders approved to be installed and used in aircraft may be securely installed in locations in the aircraft where there is minimal or no threat of damage over its service life, which may be, for example, fifteen years. The service life of any cylinder, composite or otherwise, may be significantly less than the service life of the aircraft in which it is installed, which may be, for example, thirty years. Extending the service life of conventional seamless aluminum-lined composite cylinders to match that of the aircraft may be costly and time-consuming. Service life extension efforts increase carbon emissions due to removal, packaging, transport, and significant testing, which may require, for example, burst testing and drop testing.

Accordingly, removing a cylinder from an aircraft for re-inspection and re-testing poses a risk of damage to the cylinder several times over its service life. Re-inspection and re-testing involves removal of the cylinder from the aircraft, transporting the pressurized cylinder to the manufacturer, depleting the gas, removing the valve and/or regulator, visual inspection of the interior of the cylinder, filling with fluid, holding the cylinder to a test pressure (i.e, a minimum of 1.5 times the service pressure), depleting, cleaning and drying of the test fluid, reassembling the valve and/or regulator, refilling with gas, transporting back to the aircraft, and reinstalling the cylinder in the aircraft. In re-inspecting and re-testing evacuation assembly cylinders, the entire inflatable evacuation assembly is at risk of damage since the assembly must be deployed (i.e., inflated), inspected, and then repackaged before reinstallation in the aircraft. Repackaging an evacuation assembly may be complex, difficult, and time-consuming, as it may require a crew of highly-trained personnel up to a week to complete. The composite cylinder disclosed herein may comprise a service life in excess of fifteen years and may enable an increase in time between re-inspection and re-test periods or eliminate re-inspection and re-test periods entirely. The composite cylinder may be optimized to fit into space-constrained locations in an aircraft, such as a PSU or evacuation assembly.

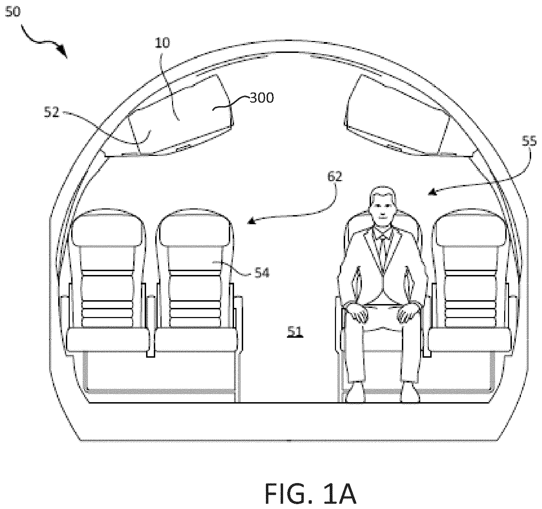

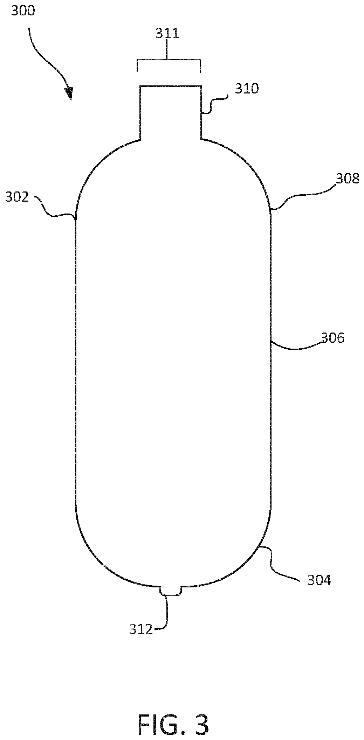

Referring to FIG. 1A, a cabin 51 of an aircraft 50 is shown, according to various embodiments. The aircraft 50 may be any aircraft such as an airplane, a helicopter, or any other aircraft. The aircraft 50 may include a passenger service unit (PSU) 10 corresponding to each row of seats 62. The PSU may be, for example, an emergency breathing oxygen PSU. The cabin 51 may include overhead bins 52, passenger seats 54 forming the row of passenger seats 62 for supporting passengers 55, etc. In various embodiments, the PSU 10 may be integral with the overhead bins 52 or the PSU 10 may be separate from the overhead bins 52. The present disclosure is not limited in this regard. In various embodiments, each PSU 10 may comprise a cylinder assembly 300 (FIG. 3A). In various embodiments, the cylinder assembly 300 may be a composite cylinder assembly and oxygen delivery assembly. The cylinder assembly 300 is configured to transfer a fluid (e.g., oxygen gas) to each passenger. Accordingly, the cylinder assembly 300 may be, for example, a composite gas cylinder.

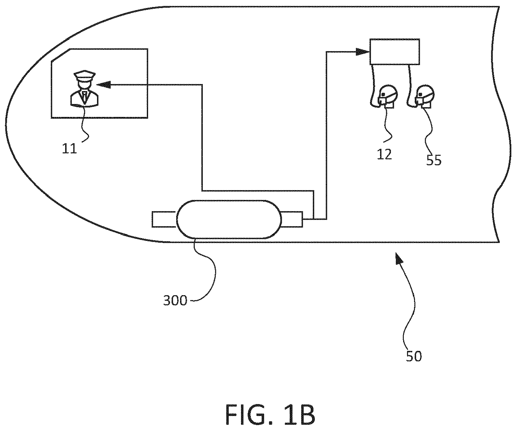

Referring to FIG. 1B, the aircraft 50 is shown in accordance with various embodiments. The aircraft 50 may include a system of composite cylinder assemblies 300 (FIG. 3A) located throughout the aircraft 50 and corresponding to the flight crew 11, flight attendants 12, and passengers 55. In various embodiments, the cylinders 300 (FIG. 3A) may be integral within a non-passenger-carrying area of the aircraft. The present disclosure in not limited in this regard. The cylinder 300 (Fig. 3A) may transfer a fluid (e.g., oxygen gas) to each crew member, flight attendant, and/or passenger.

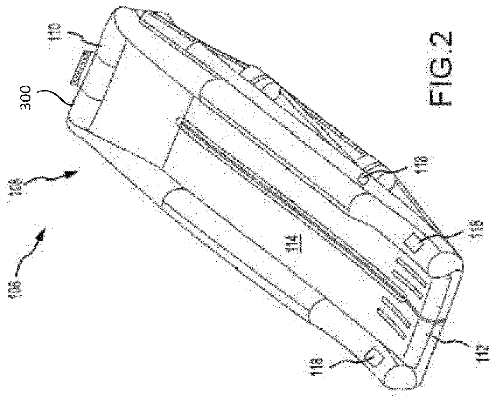

With reference to FIG. 2, an evacuation assembly 106 is illustrated with the evacuation slide 108 of the evacuation assembly 106 in an inflated or "deployed" position. In accordance with various embodiments, evacuation assembly 106 includes an evacuation slide 108. During deployment, evacuation slide 108 is inflated using pressurized gas from a compressed fluid source, such as, for example, a cylinder assembly 300 (FIG. 3A). Evacuation slide 108 may include a head end 110 and a toe 112 opposite head end 110. A sliding surface 114 of evacuation slide 108 extends from head end 110 to toe end 112. In various embodiments, one or more inflation sensor(s) 118 is/are operably coupled to evacuation slide 110. Inflation sensor(s) 118 may include pressure sensor(s) configured to measure a pressure of evacuation slide 108. In various embodiments, the cylinder assembly 300 may comprise compressed carbon dioxide or nitrogen, or combination thereof. In various embodiments, the cylinder assembly 300 may inflate various evacuation assemblies, such as, for example, evacuation life rafts. Aircraft evacuation assemblies comprising the cylinder assembly 300 may be installed in aircraft exit door compartments, the wings, the fuselage, or stored within the aircraft.

Referring to FIG. 3, a composite cylinder assembly 300 is shown in accordance with various embodiments. Specifically, a tube liner 302 of the composite cylinder assembly 300 is shown. The tube liner 302 may comprise a closed bottom portion 304, a substantially cylindrical wall 306, and a domed head portion 308. In various embodiments, the domed head portion 308 may define a liner neck 310. The tube liner 302 of the composite cylinder assembly 300 may be configured to be any size suitable for portability and/or stowage in the aircraft. For example, in various embodiments, the tube liner 302 may define a water volume of 0.25 liters to 0.5 liters (0.055 gallons (gal) to 0.11 gal), 0.5 liters to 0.75 liters (0.11 gal to 0.165 gal), 0.75 liters to 1 liter (0.165 gal to 0.22 gal), or 1 liter to 2 liters (0.22 gal to 0.44 gal), and the like. In various embodiments, the tube liner 302 may be greater than 2 liters (0.44 gal). For example, the tube liner 302 may be 2 liters to 15 liters (0.44 gal to 3.3 gal), 15 liters to 30 liters (3.3 gal to 6.6 gal), or 30 liters to 50 liters (6.6 gal to 11 gal).

The cylinder assembly 300 may comprise gaseous oxygen, which may replace chemically generated oxygen in the PSU, enabling an aircraft to fly for as much as 60 minutes longer to reach an altitude where emergency breathing oxygen is not required. While the composite cylinder assembly 300 shown in FIG. 3 is substantially cylindrical, it can be appreciated by those skilled in the art that the cylinder may be configured to any shape suitable for efficient stowage or placement in the PSU.

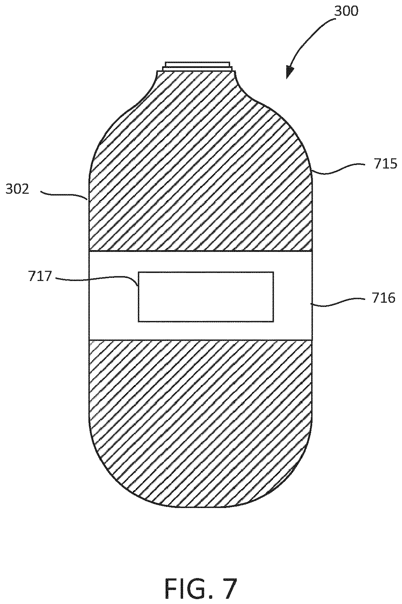

In various embodiments, the tube liner 302 may be made of steel, stainless steel, aluminum, aluminum alloys, brass, titanium, and the like. For cylinder assemblies housing oxygen and placed in the PSU, or in other engine rotor burst zone areas of the aircraft passenger cabin, it may be advantageous to utilize a stainless steel tube liner. Stainless steel liners may be less prone to fragmentation or bursting upon contact with a projectile. Moreover, a stainless-steel liner may have a minimum burst pressure at least three times a service pressure. Stated differently, a stainless-steel liner may have a minimum burst pressure at least three times the pressure it is filled to before installation in the aircraft. As will be discussed further below in reference to FIG. 7, stainless steel liners may be fiber overwrapped cylinders (i.e., composite cylinders) pressurized with pure oxygen. Fiber overwrapped composite cylinders may be even less prone to fragmentation upon impact with a projectile.

In various embodiments, the tube liner 302 may be formed via metal spinning. For example, in various embodiments, the domed head portion 308 may be spun into an open neck shape. Accordingly, the domed head portion 308 may define a liner neck 310. Furthermore, in forming the tube liner 302 via metal spinning, the substantially cylindrical wall 306 of the tube liner 302 may be seamed or seamless. In various embodiments, the tube liner 302 may be optionally exposed to an elevated temperature treatment to improve the mechanical properties of the liner 302. In various embodiments, the tube liner 302 may comprise a spindle 312. The spindle 312 may be coupled to the bottom portion 304 of the tube liner 302. The spindle 312 may be a cylindrical disk configured to adhere to the spin-welded closed bottom portion 304 of the tube liner 302. For example, the spindle 312 may be welded to the closed bottom portion 304. In various embodiments, the spindle 312 may be incorporated into the closed bottom portion 304 via hydrospinning or deep drawing. In various embodiments, the spindle 312 may be configured to wind fiber onto the tube liner 302. In various embodiments, the spindle 312 may be made of steel, stainless steel, aluminum, aluminum alloy, brass, titanium, and the like.

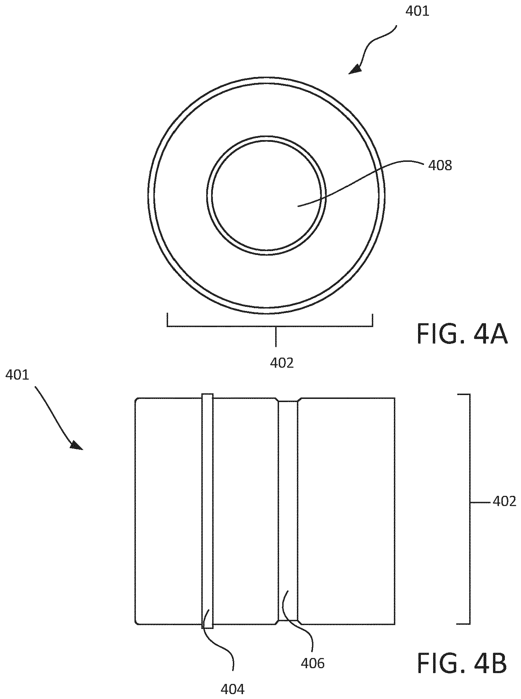

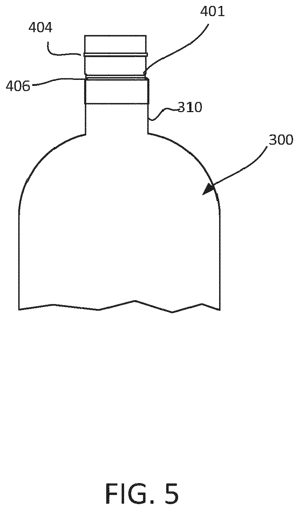

Referring to FIGS. 4A, 4B, and 5, the cylinder assembly 300 may further comprise a port 401. In various embodiments, the port 401 may comprise an outer diameter 402 configured to fit into an inner diameter 311 (FIG. 3) of the liner neck 310. The port 401 may further comprise a lip 404 and a swage recess 406. The lip 404 may comprise an outer diameter that is greater than the inner diameter 311 of the liner neck 310, which may enable depth control during swaging the liner neck 310 to the port 401. The swage recess 406 may comprise an outer diameter that is less than the inner diameter 311 of the liner neck 310. This may provide an area to swage the liner neck 310 to the port 401. In various embodiments, the port 401 may define a channel 408. In various embodiments, the channel 408 may be threaded on an inner surface. In various embodiments, the channel 408 may be substantially cylindrical. The channel 408 may be configured to allow one of a gas, liquid, or the like, to pass therethrough.

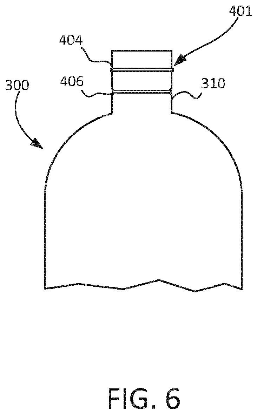

In various embodiments, as further shown in FIGS. 5 and 6, the port 401 may be configured to press-fit into the liner neck 310. Accordingly, the port outer diameter 402 may be similar to the liner neck inner diameter 311 to provide a pressed fit inside the liner neck 310. The lip 404 of the port 401 may be configured to stop the liner neck 310 at the lip 404. Accordingly, the lip 404 may control the depth of the press fit. In various embodiments, the lip 404 may be configured to provide a surface area to weld the port 401 to the liner neck 310. In various embodiments, the liner neck 310 may be configured to be spin welded to the port lip 404. In various embodiments, the liner neck 310 may be configured to be fusion welded to the port lip 404. In various embodiments, the swage recess 406 may be configured to provide an area to swage the liner neck 310 to the port 401. Accordingly, swaging the liner neck 310 to the port 401 helps retain the port 401 during burst testing. In various embodiments, the port 401 may be made of steel, stainless steel, aluminum, aluminum alloys, brass, titanium, and the like.

In various embodiments, the respective outer diameters and inner diameters of the port and liner neck may range from 0.25 inches (6.35 millimeters(mm)) to 0.5 inches (12.7 mm), 0.5 inches (12.7 mm) to 0.75 inches (19.05 mm), 0.75 inches (19.05 mm) to 1 inch (25.4 mm), 1 inch (25.4 mm) to 1.25 inches (31.75 mm), 1.25 inches (31.75 mm) to 1.5 inches (38.1 mm), or 1.5 inches (38.1 mm) to 2.0 inches (50.8 mm).

With reference to FIG. 7, the composite cylinder assembly 300 is shown in accordance with various embodiments. As shown, the tube liner 302 of the composite cylinder assembly 300 comprises a carbon fiber overwrap 715. It may be advantageous to overwrap a metallic liner with carbon fiber, since the carbon fiber may be the primary strength of the cylinder, increasing the average burst pressure. By way of example, a stainless-steel liner may have a burst pressure of about 9,500 psi (65.5 megapascal (MPa)) at a service pressure of 3,000 psi (20.68 MPa). With a carbon-fiber overwrap, the liner may reach a 20,000 psi (137.9 MPa) burst pressure.

An additional benefit of incorporating the described carbon fiber overwrap 715 is that the metallic liner may then act as a non-load-sharing, gas-impermeable bladder, holding the gas and preventing the gas from permeating and/or oxidizing the assembly. In this case, the majority of the strength comes from the carbon fiber overwrap 715. Accordingly, the liner 302 may be a non-load-sharing liner. The strength of a carbon fiber overwrapped non-load-sharing liner may increase the service life of the composite cylinder assembly 300 in operation. Moreover, a carbon fiber overwrapped stainless-steel liner may be a lighter weight than an all-metal or load-sharing liner carbon fiber overwrapped configuration. For example, in an aircraft having 175 cylinders, one for each passenger, the weight savings from a carbon fiber overwrapped non-load-sharing liner may enable the addition of one extra passenger, or more cargo, on board. Accordingly, the non-load-sharing liner may benefit in the way of sustainability both in operating life and weight savings.

In various embodiments, the carbon fiber overwrap 715 may further comprise a glass fiber layer 716. The glass fiber layer 716 may be configured to protect a label 717. For example, the glass fiber layer 716 may be configured to protect an orange label indicating a composite cylinder assembly configured for an evacuation slide, or a green label indicating a composite cylinder assembly housing oxygen.

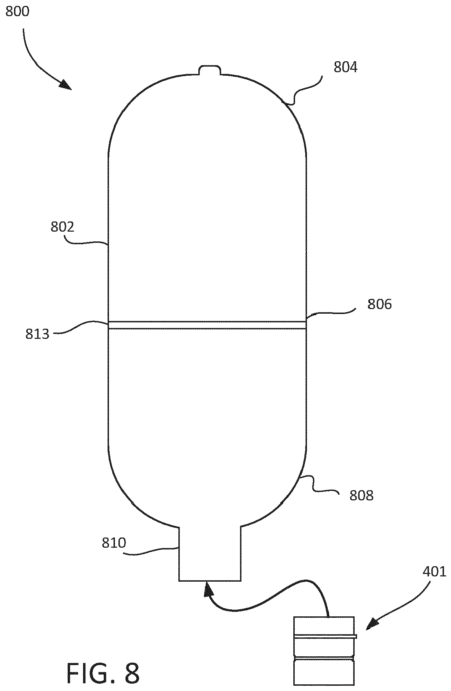

Referring to FIG. 8, a composite cylinder assembly 800 is shown in accordance with various embodiments. In various embodiments, the composite cylinder assembly 800 may comprise a tube liner 802. As shown, the tube liner 802 may comprise a closed bottom portion 804, a substantially cylindrical wall 806, and a domed head portion 808. In various embodiments, the domed head portion 808 may define a liner neck 810. The domed head portion 808 and closed bottom portion 804 may be hydroformed. In various embodiments, the domed head portion 808 and closed bottom portion 804 may be deep drawn stamped (i.e., deep drawn). In various embodiments, the domed head portion 808 and the closed bottom portion 804 may be trimmed to a desirable length.

In various embodiments, the domed head portion 808 and closed bottom portion 804 may be subjected to elevated temperature treatment and subsequent controlled cooling to improve the mechanical properties of the composite cylinder assembly 800 during and after forming.

In various embodiments, the substantially cylindrical wall 806 may be configured to be formed by fusion welding the domed head portion 808 to the bottom portion 804. Accordingly, the substantially cylindrical wall 806 may comprise a fusion weld line 813 along a girth of the substantially cylindrical wall 806, forming a shorter length composite cylinder assembly.

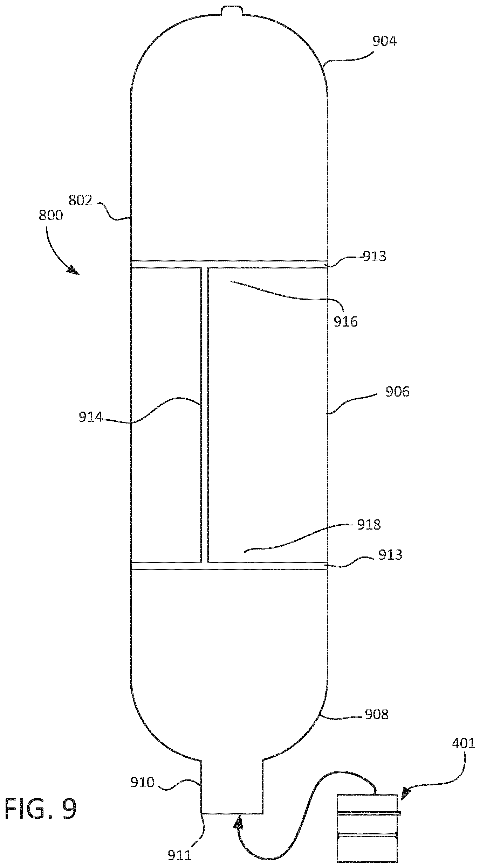

In various embodiments, and as shown in FIG. 9, a substantially cylindrical wall 906 may be configured to be fabricated from sheet metal, for example, stainless steel. The substantially cylindrical wall 906 may be configured to be seam welded. Accordingly, the substantially cylindrical wall 906 may comprise a seam weld line 914. In various embodiments, the substantially cylindrical wall 906 may be configured to be fusion welded to the bottom portion 904 at a first end 916 of the substantially cylindrical wall 906. The substantially cylindrical wall 906 may also be configured to be fusion welded to the domed head portion 908 at a second end 918 of the substantially cylindrical wall 906. Accordingly, the tube liner 802 may comprise a plurality of fusion weld lines 913. This embodiment may be well-adapted for longer length cylinder assemblies. The cylinder assemblies shown in FIGS. 8 and 9 may comprise the port 401 shown in FIGS. 4A and 4B, and FIGS. 5-7, and previously described herein.

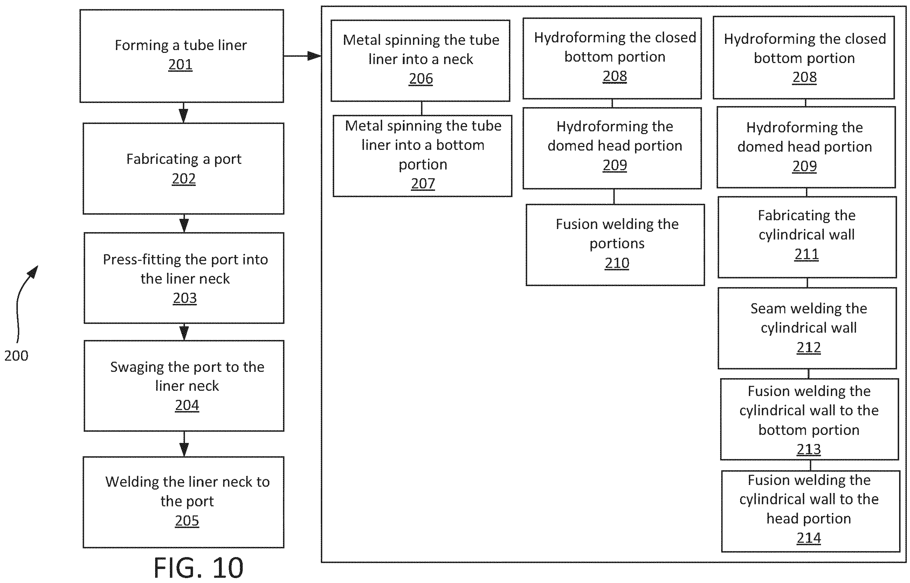

FIG. 10 shows a method 200 of manufacturing a composite cylinder assembly 300, in accordance with various embodiments. In various embodiments, the method 200 may comprise forming (step 201) a tube liner 302. The tube liner 302 may comprise a closed bottom portion 304, a substantially cylindrical wall 306, and a domed head portion 308. The domed head portion may define a liner neck 310.

The method 200 may further comprise fabricating (step 202) a port 401. The port 401 may comprise an outer diameter 402 configured to fit into an inner diameter 311 of the liner neck 310. The port 401 may comprise a lip 404 and a swage recess 406. In various embodiments, the lip 404 may comprise an outer diameter that is greater than the inner diameter 311 of the liner neck 310. In various embodiments, the swage recess 406 may comprise an outer diameter that is less than the inner diameter 311 of the liner neck 310.

The method 200 may further comprise press-fitting (step 203) the port 401 into the liner neck 310. In various embodiments, the method 200 may further comprise swaging (step 204) the liner neck 310 to the port 401 at the swage recess 406. In various embodiments, the method 200 may further comprise welding (step 205) the port 401 to the liner neck 310 at the lip 404 of the port 401. The welding (step 205) may be, for example, fusion welding.

In various embodiments, the forming step (step 201) of the method 200 may further comprise metal spinning (step 206) the tube liner 302 into a domed head portion defining a neck. The forming step (step 201) of the method 200 may further comprise metal spinning (step 207) the tube liner 302 into a closed bottom portion. In various embodiments, the forming step (step 201) may comprise hydroforming (steps 208 and 209) the closed bottom portion 804 and the domed head portion 808. In various embodiments, the tube liner's closed bottom portion 804 and domed head portion 808 may be formed via deep drawing. The present disclosure is not limited in this regard. The forming (step 201) may further comprise fusion welding (step 210) the domed head portion 808 to the bottom portion 804 to form the substantially cylindrical wall 806. The substantially cylindrical wall 806 may comprise a fusion weld line 813 along a girth of the substantially cylindrical wall 806.

In various embodiments, the forming (step 201) may further comprise hydroforming (steps 208 and 209) the closed bottom portion 904 and the domed head portion 908. In various embodiments, the tube liner's closed bottom portion 904 and the domed head portion 908 may be formed via deep drawing. The present disclosure is not limited in this regard. The forming (step 201) may further comprise fabricating (step 211) the substantially cylindrical wall 906 from sheet metal such as stainless steel. In various embodiments, the forming (step 201) may further comprise seam welding (step 212) the substantially cylindrical wall 906. The substantially cylindrical wall 906 may comprise a seam weld 914. The forming (step 201) may further comprise fusion welding (step 213) the substantially cylindrical wall 906 to the bottom portion 904 at a first end 916 of the substantially cylindrical wall 906. Forming (step 201) may further comprise fusion welding (step 214) the substantially cylindrical wall 906 to the domed head portion 908 at a second end 918 of the substantially cylindrical wall 906.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A composite cylinder assembly, comprising:
a tube liner (302, 802), wherein the tube liner (302, 802) comprises:
a closed bottom portion (304, 804);
a domed head portion (308, 808), wherein the domed head portion (308, 808) defines a liner neck; and
a substantially cylindrical wall coupled to the closed bottom portion (304, 804) and domed head portion (308, 808), wherein the substantially cylindrical wall is between the closed bottom portion (304, 804) and domed head portion (308, 808); and
a port (401), wherein the port (401) comprises an outer diameter configured to fit into an inner diameter of the liner neck, wherein the port (401) further comprises:
a lip (404) , wherein the lip (404) comprises an outer diameter that is greater than the inner diameter of the liner neck; and
a swage recess (406) , wherein the swage recess (406) comprises an outer diameter that is less than the inner diameter of the liner neck,
wherein the port (401) is configured to press-fit into the liner neck, wherein the lip (404) is configured to provide a surface area to weld the port (401) to the liner neck, wherein the swage recess (406) is configured to provide an area to swage the liner neck to the port.

2. The composite cylinder assembly of claim 1, wherein the tube liner (302, 802) comprises a spindle, wherein the spindle is a cylindrical disk.

3. The composite cylinder assembly of claim 1 or 2, wherein the tube liner (302, 802) comprises a carbon fiber overwrap, wherein the carbon fiber overwrap further comprises a glass fiber layer, or wherein the tube liner (302, 802) is made of metal.

4. The composite cylinder assembly of any preceding claim, wherein the substantially cylindrical wall of the tube liner (302, 802) is seamed.

5. The composite cylinder assembly of any preceding claim, wherein the tube liner (302, 802) is spin welded.

6. The composite cylinder assembly of any preceding claim, wherein the port (401) defines a channel, and optionally wherein the channel is substantially cylindrical.

7. The composite cylinder assembly of any preceding claim, wherein the liner neck is stoppered at the port (401) lip (404) , or wherein the liner neck is spin welded to the lip (404) , or wherein the liner neck is fusion welded to the lip (404) .

8. A composite cylinder assembly, comprising:
a tube liner (302, 802), wherein the tube liner (302, 802) comprises:
a closed bottom portion (304, 804), wherein the closed bottom portion (304, 804) is deep drawn;
a domed head portion (308, 808), wherein the domed head portion (308, 808) defines a liner neck, wherein the domed head portion (308, 808) defining the liner neck is deep drawn; and
a substantially cylindrical wall coupled to the closed bottom portion (304, 804) and domed head portion (308, 808), wherein the substantially cylindrical wall is between the closed bottom portion (304, 804) and domed head portion (308, 808); and
a port, wherein the port (401) comprises an outer diameter configured to fit into an inner diameter of the liner neck, wherein the port (401) further comprises:
a lip (404) , wherein the lip (404) comprises an outer diameter that is greater than the inner diameter of the liner neck; and
a swage recess (406) , wherein the swage recess (406) comprises an outer diameter that is less than the inner diameter of the liner neck,
wherein the port (401) is configured to press-fit into the liner neck, wherein the lip (404) is configured to provide a surface area to weld the port (401) to the liner neck, wherein the swage recess (406) is configured to provide an area to swage the liner neck to the port.

9. The composite cylinder assembly of claim 8, wherein the substantially cylindrical wall fusion welded to the domed head portion (308, 808) and to the closed bottom portion (304, 804), wherein the substantially cylindrical wall comprises a fusion weld line along a girth of the substantially cylindrical wall.

10. The composite cylinder assembly of claim 8 or 9, wherein the substantially cylindrical wall is made of metal, wherein the substantially cylindrical wall comprises a seam weld line.

11. The composite cylinder assembly of claim 10, wherein the substantially cylindrical wall is fusion welded to the closed bottom portion (304, 804) at a first end of the substantially cylindrical wall, wherein the substantially cylindrical wall is fusion welded to the domed head portion (308, 808) at a second end of the substantially cylindrical wall.

12. The composite cylinder assembly of claim 11, wherein the tube liner (302, 802) comprises a plurality of fusion weld lines.

13. A method of manufacturing a composite cylinder assembly, comprising:
forming a tube liner (302, 802), wherein the tube liner (302, 802) comprises:
a closed bottom portion (304, 804);
a domed head portion (308, 808), wherein the domed head portion (308, 808) defines a liner neck; and
a substantially cylindrical wall coupled to the closed bottom portion (304, 804) and domed head portion (308, 808), wherein the substantially cylindrical wall is between the closed bottom portion (304, 804) and domed head portion (308, 808); and
fabricating a port, wherein the port (401) comprises an outer diameter configured to fit into an inner diameter of the liner neck, wherein the port (401) comprises:
a lip (404) , wherein the lip (404) comprises an outer diameter that is greater than the inner diameter of the liner neck; and
a swage recess (406) , wherein the swage recess (406) comprises an outer diameter that is less than the inner diameter of the liner neck;
press-fitting the port (401) into the liner neck;
swaging the liner neck to the port (401) at the swage recess (406) ; and
welding the port (401) to the liner neck at the lip (404) of the port.

14. The method of claim 13, wherein the forming comprises spin welding the tube liner (302, 802), and, or wherein the forming comprises deep drawing the closed bottom portion (304, 804) and the domed head portion (308, 808), wherein the forming further comprises fusion welding the domed head portion (308, 808) to the closed bottom portion (304, 804) to form the substantially cylindrical wall, wherein the substantially cylindrical wall comprises a fusion weld line along a girth of the substantially cylindrical wall.

15. The method of claim 13 or 14, wherein the forming further comprises:
deep drawing the closed bottom portion (304, 804) and the domed head portion (308, 808);
fabricating the substantially cylindrical wall from sheet metal;
seam welding the substantially cylindrical wall;
fusion welding the substantially cylindrical wall to the closed bottom portion (304, 804) at a first end of the substantially cylindrical wall; and
fusion welding the substantially cylindrical wall to the domed head portion (308, 808) at a second end of the substantially cylindrical wall.
